# EUROPÄISCHE PATENTSCHRIFT

(11) **EP 0 443 673 B1**
(45) Veröffentlichungstag und Bekanntmachung des Hinweises auf die Patenterteilung: **24.08.1994**
(21) Anmeldenummer: 91200325.8
(22) Anmeldetag: 14.02.1991
(51) Int. Cl.: B05B 15/12, B01D 53/04

(54) **Verfahren und Vorrichtung zur Entfernung von Gasen, Dämpfen, Nebel und Staubteilchen aus Betriebsräumen**
Method and device for removing gas, vapors, mists and dusts from industrial rooms
Procédé et dispositif pour éliminer les gaz, vapeurs, brouillards et poussières de locaux industriels

(30) Priorität: 19.02.1990 NL 9000390
(43) Veröffentlichungstag der Anmeldung: 28.08.1991
(73) Patentinhaber: ROTACAB B.V., 5046 AA Tilburg (NL)
(72) Erfinder: Poppelaars, Josephus Rumoldus, NL-5094 BD Lage Mierde (NL)
(74) Vertreter: Siemens, Andreas Meinhard Ernest, Dipl.-Ing.

(56) Entgegenhaltungen:
- FR-A- 2 284 921
- US-A- 3 395 972
- US-A- 4 021 211
- US-A- 4 687 686

## Beschreibung

Die vorliegende Erfindung bezieht sich auf ein Verfahren und eine Vorrichtung zum Entfernen und unschädlich machen von Dämpfen und Gasen von zerstäubten Lösungsmitteln und Lackresten, wie angewandt in der gewerblichen Lacktechnik, wobei diese Dämpfe und Gase sich in Lack-, Spritz-, Trocknungs-und Härtungskabinen, -Tunneln und dergleichen entwickeln können, wie zum Beispiel in Spritzkabinen für Kraftfahrzeuge, in Härtungsanlagen für gewerbliche und eigenbedarfliche Geräte und Apparate, und so weiter.

Auch für andere Räumlichkeiten, wie Werkstätten und Garagen, kann dies wichtig sein.

Diese Kabinen und Räume sind mit Absaugevorrichtungen versehen.

In den Spritz, Härtungs-und Trocknungskabinen werden jedoch Dämpfe von Lösungsmitteln und Lackreste freigesetzt, die schwer zu entfernen sind, weil die Kohlenwasserstoffe und Ester, die den Hauptbestandteil der Lösungsmittel ausmachen, eine höhere Dichte als Luft besitzen, und wegen der geringen Mischbarkeit mit Wasser auch durch Wasserschirme und - schleusen nicht in genügendem Masse erfasst oder gelöst werden können.

Ausserdem erniedrigen diese Dämpfe die Sauerstoffkonzentration und sind viele dieser Verbindungen und ihre Derivate toxisch, sodass es für die Arbeitshygiene, sowie vom Blickpunkt der Oekologie und der Umweltsorge her notwendig erachtet werden muss, dass sie nicht nur abgesaugt, doch ausserdem solchermassen entfernt und unschädlich gemacht werden, dass sie nicht in die Aussenluft gelangen können. Die Atmosphäre wird durch Kohlenwasserstoffe und halogenierte Verbindungen derselben in zunehmendem Masse belastet und bedroht.

Im U.S.-Patent 3,395,972 wurde eine Luftreinigungsanlage beschrieben, welche in mehreren Stufen Luft von einem Arbeitsraum von flüchtigen Stoffen und von Stäuben befreit und die so behandelte Luft wieder in den Arbeitsraum zurückführt.

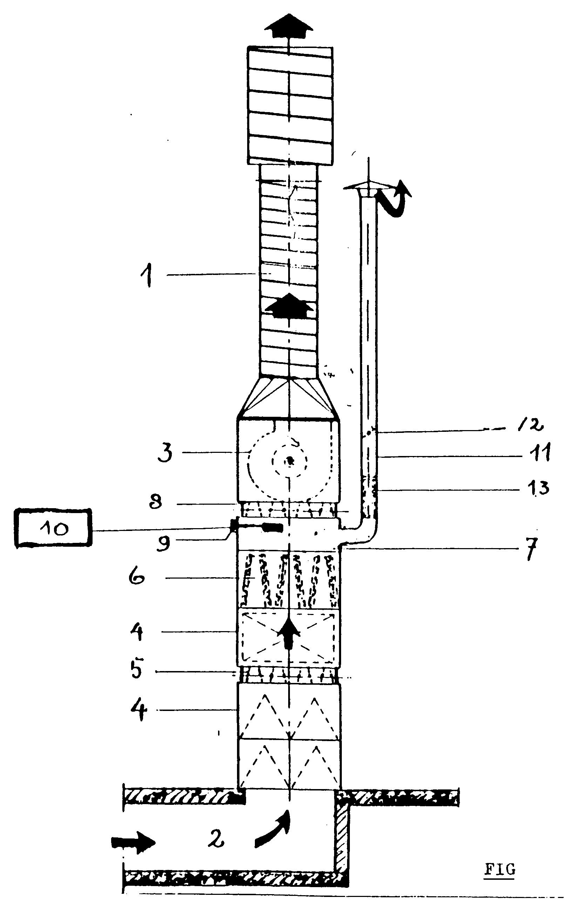

Dazu wird in der beschriebenen Anlage nebst einem Pumpensystem ein sich kontinuierlich fortbewegendes aus Metallgaze bestehendes Transportband mit Verbrennungsgeräten vorgeschlagen. Der Kohlendioxydgehalt würde jedoch erhöht, wenn nicht ständig Frischluft zugeführt würde. In der Figur 1 wird gezeigt, dass ein Raum unter dem Fussboden erforderlich ist für die Entfernung von brennbaren Festteilchen, während die Dämpfe nach oben zu einem Katalysatorgehäuse geführt werden müssen.

Abtrennung von Lösungsmitteldämpfen wurde in U.S.-Pat. 4,021,211 beschrieben. Es wird dazu Aktivkohle in einem Bett in Behältern angewandt, die, nach vollständiger Beladung durch die Adsorption, regeneriert wird durch Desorption.

Es wird in 2 Behältern abwechselnd adsorbiert und desorbiert, letzteres mit Dampf (Siehe Figur 1).

Nach der vorliegenden Erfindung wird ein Verfahren vorgeschlagen, wobei die Gase und Dämpfe durch Adsorption an aktiven Kohlenstoff gebunden werden, und die dafür verwendeten Adsorptionsfilter durch Luftansaugung wieder reaktiviert werden, wonach die desorbierten Stoffe durch einen Umleitungsschlot geführt werden, in welchem sich ein flammloses Spalt- und Verbrennungselement befindet, sodass aus diesem Umleitungsschlot nur noch Wasserdampf und Kohlendioxyd entweicht.

Gemäss diesem Verfahren werden auch Flüssigkeits- und Staubteilchen aus der Luft von Betriebsräumen entfernt und unschädlich gemacht.

Die Vorrichtung enthält einen Ansaugekanal und einen Hauptkamin mit Ventilatorgehäuse, und sie ist erfindungsgemäss dadurch gekennzeichnet, dass sich zwischen dem Ansaugekanal und dem Ventilatorgehäuse eine Filterkammer mit staubfangenden profilierten und Balgfiltern, sowie ein Abteil mit Filterventilen befindet, über denen eine Adsorptionskammer mit Aktivkohlenstoff-Filtern angebracht ist, wonach sich ein Pufferraum anschliesst, worin sich ein oder mehrere Sensoren befinden, die auf Kohlenwasserstoffe und organische Derivate, wie Ester, ansprechen, und die mit einer Steuerungs- und Reglungseinheit für die Ventilatorventile und für ein Ansaugeventil in einem Umleitungsschlot verbunden sind, und welche diese durch ein elektronisches Schaltgerät steuern können, während sich oberhalb des besagten Pufferraumes der Ventilator am Kamin befindet, und der Pufferraum ferner mit dem Umleitungsschlot ("Bypass") verbunden ist, der ein flammlos funktionierendes Spalt- und Verbrennungselement mit elektrischer Beheizung und ein elektronisch bedientes Ansaugventil enthält.

Das Verfahren ist erfindungsgemäss dadurch gekennzeichnet, dass man die Dämpfe und Gase enthaltende Luft, nachdem sie durch eine Adsorptionskammer mit Aktivkohlenstoff geleitet ist, in einen Pufferraum leitet, in welchem sich ein Sensor befindet, der auf Kohlenwasserstoffe und flüchtige organische Derivate reagiert und der beim Auftreten dieser Verbindungen in diesem Pufferraum einen elektrischen Steuerkreis aktiviert, welcher die Ventile vor dem Ventilator zum Hauptkamin schliesst und gleichzeitig ein Ventil in einem Umleitungsschlot öffnet, wodurch die Dämpfe und Gase enthaltende Luft durch ein elektrisch beheiztes flammlos wirkendes oxydierendes Element aus Keramik strömt, sodass die organischen Verbindungen vernichtet werden.

Der Aktivkohlenstoff in der Adsorptionskammer wird, wenn er vollständig durch die Adsorption beladen ist, durch Ansaugen reiner Luft reaktiviert (Desorption), wobei die verunreinigten Gase dann durch das flammlos wirkende oxydierende Element im Umleitungsschlot geleitet werden.

Wenn nun in der Kabine Lack versprüht wird, werden durch eine Schaltleitung mit dem Handabzug der Sprühpistole die Ventilatorventile geöffnet und der Ventilator eingeschaltet, sodass die Luft mit den organischen Stoffen durch den Ansaugkanal, durch die Filter in der Filterkammer und durch den Aktivkohlenstoff in der Adsorptionskammer gesaugt wird.

Die profilierten Filter und die Balgfilter in der Filterkammer erfassen die Festteilchen, und der adsorbierende Aktivkohlenstoff bindet an seiner grossen spezifischen Oberfläche die organischen Verbindungen. Wenn der Aktivkohlenstoff die Grenze seiner Adsorptionskapazität er-reicht hat, reagiert der Sensor, der nach dem Diffusions- und Chemosorptionsprinzip funktioniert.

Durch die Diffusion und Chemosorption der organischen Verbindungen unterliegt das Diffusions-potential des Sensors einer Aenderung, und dadurch entsteht sofort ein Impedanzunterschied im elektronischen Stromkreis, welcher in einer Schaltung als Digitalwert dieses Stromkreises in ein kompatibeles Ausgangssignal umgesetzt wird, und die elektrische Bedienung der Ventilatorventile so steuert, dass diese sich sofort schliessen.

Gleichzeitig damit wird das Ventil im Umleitungsschlot geöffnet, sodass die nicht weiter adsorbierbaren Stoffe durch ein elektrisch beheiztes keramisches Rohr des flammlosen Spalt- und Verbrennungselementes im Umleitungsschlot gesaugt werden.

Dieses Element wird elektrisch erhitzt auf eine Temperatur von 800-1000°C, wodurch die organischen Moleküle gespalten und praktisch vollständig zu Kohlendioxyd und Wasser verbrannt werden.

Die Bedienung der Ventile geschieht vorzugsweise durch einen Servomotor mit Servosteuerung, wodurch eine schnelle Uebertragung des digitalen Signals eine sofortige Aenderung der Ventileinstellung zur Folge hat.

Die Funktion des Sensors nach dem Diffusions - und Chemosorptionsprinzip mit Aenderung des Diffusionspotentials und der Impedanz im Stromkreis der Steuerung, wodurch die mechanische Aktion auf die Ventile zur Oeffnung und zum schliessen initiiertwird, ist aus der Literatur bekannt, wie zum Beispiel in K. Garbrecht und A. Prommer, "Mikroelektronik" (1980), S.59 u.f., C. Weddigen und W. Jüngst, "Elektronik" (Springer 1986) S.190 u.f., und Siemens A.G., München, "Mikrocomputer-Peripherik" (1980), S. 9 u.f.

Die Eigenschaften des Aktivkohlenstoffs , wie in den Adsorptionsfiltern angewandt, sind unter anderem beschrieben in S. Brunauer, "The adsorption of gases and vapours", Vol. I, "Physical Adsorption", (London, Oxford University Press, 1945) und in H. Griffiths, "The properties and applications of adsorptive carbons", Journal of the Institute of Fuel, Nr.8 (1935), S. 277-295.

Die spezifische Oberfläche dieses Kohlenstoffs, die besonders gross ist, kann bestimmt werden nach der Methode von Brunauer, Emmet und Teller, wie beschrieben im Journ. Am. Chem. Soc. 60, (1938), S.309.

Durch Ansaugen von Luft durch den Kohlenstoff hindurch kann dieser wieder vollständig von den adsorbierten Stoffen befreit werden, und er ist dann wieder für erneute Adsorption verwendbar.

Die Vorrichtung und das Verfahren gemäss der vorliegenden Erfindung werden an Hand der beigefügten Figur näher erläutert.

In dieser Figur ist ein schematischer senkrechter Schnitt der Vorrichtung dargestellt.

Darin sind die nachfolgenden Teile angegeben (die elektrischen Leitungen zu den Ventilen sind ausser Betracht gelassen):
(1) ist der Hauptkamin.
(2) ist der Ansaugkanal des Arbeitsraums, hier als Fluransaugkanal dargestellt. Es kann auch eine einfache Rohrleitung sein.
(3) ist das Ventilatorgehäuse, das einen elektrisch angetriebenen Ventilator enthält.
(4) ist die Filterkammer, die profilierte Filter aus Textil- und/oder Glasfasern und Ventile zum Balgfilterteil enthält.
(5) sind die Filterventile.
(6) ist die Adsorptionskammer mit Aktivkohlenstoff-Filtern.
(7) ist ein Pufferraum, in dem sich ein oder mehrere Sensoren befinden.
(8) sind die Ventile für den Ventilator.
(9) ist ein Sensor, der das Signal der Impedanzänderung zum Steuerungs- und Regelstromkreis leitet.
(10) ist der Steuerungs- und Regelstromkreis für die Ventile (8) und (12).
(11) ist der Umleitungsschlot.
(12) ist das Ansaugventil im Umleitungsschlot (11), welches ebenfalls elektronisch betätigt wird, und nur geöffnet ist, wenn die anderen Ventile geschlossen sind.
(13) ist ein Spalt- und Verbrennungselement aus keramischem Material, das elektrisch geheizt wird bis auf 800-1000°C, und das Kanäle enthält, durch welche die Gase strömen.

Die Erfindung ist nicht auf die dargestellte Verkörperung beschränkt. Angleichungen an spezifische Forderungen und Ergänzungen mit an sich bekannter Apparatur, wie z.B. ein Venturi-Rohr im Abfuhrkamin, und Signal- und Warnanzeiger (akustisch oder visuell), Signallampen, übliche Schaltschränke und Monitoren, können in dieser Aufstellung angebracht werden.

Auch Registriergeräte, welche Daten übermitteln und speichern, können dabei verwendet werden.Selbstverständlich muss die elektrische Anlage explosionsgeschützt sein.

Versuche haben gezeigt, dass mit der erfindungsgemässen Anlage keine Belastung der Umwelt mit flüchtigen organischen Stoffen mehr eintritt und keine Behinderung oder Gefahr zu befürchten ist.

Infrarotspektrometrische Analysen der angesaugten und der abgeführten Luft wurden ausgeführt während des Lackierens von Karrosserien und von Teilen in Sprühkabinen, die mit der Anlage gemäss der Erfindung versehen waren.

Die angesaugte Luft enthielt Toluol, Isobutylazetat, Aethylazetat, n-Butylazetat, Aethylbenzol, ortho-, meta-und Paraxylol, Methoxypropanol, Methyloxitolazetat und Isopropylmethylketon.

Beim Sprühen während 15 Minuten verringerte sich die Konzentration der Lösungsmittel schnell, sodass nur noch 13 Teile pro Million in der abgeführten Luft nachgewiesen werden konnten. Der zulässige Grenzwert für die Lösungsmittel beträgt 150 Teile pro Million.

## Patentansprüche

1. Verfahren zum Entfernen und unschädlich machen von Lösungsmitteldämpfen und Gasen aus Sprüh-, Trocknungs- und Härtungskabinen und - Tunneln für die gewerbliche Lackiertechnik, wobei man die Dämpfe und Gase enthaltende Luft durch Filterkammern (4) und anschliessend durch eine Adsorptionskammer (6) mit Aktivkohlenstoff leitet, worauf man sie durch einen Ventilator (3) in einen Hauptkamin (1) saugen lässt, **dadurch gekennzeichnet**, dass man die Dämpfe und Gase enthaltende Luft nach der Adsorptionskammer (6) in einen Pufferraum (7) leitet, in welchem sich ein Sensor (9) befindet, der auf Kohlenwasserstoffe und flüchtige organische Derivate reagiert und beim Auftreten dieser Verbindungen im besagten Pufferraum (7) einen elektrischen Steuerkreis (10) aktiviert, welcher die Ventile (8) vor dem Ventilator (3) schliesst und ein Ventil (12) in einem Umleitungsschlot (11) öffnet, wodurch man die Dämpfe und Gase enthaltende Luft durch ein elektrisch beheiztes flammlos wirkendes oxydierendes Element (13) strömen lässt, sodass die organischen Verbindungen vernichtet werden.

2. Vorrichtung zum Entfernen und unschädlich machen von Lösungsmitteldämpfen und Gasen aus Sprüh-, Trocknungs- und Härtungskabinen und -Tunneln für die gewerbliche Lackiertechnik, bei der die Dämpfe enthaltende Luft durch Filterkammern (4) und anschliessend eine Adsorptionskammer (6), welche Aktivkohlenstoff enthält, gereinigt wird, mit einem Ventilator (3) und einem Hauptkamin (1), **dadurch gekennzeichnet**, dass sich an die Adsorptionskammer (6) ein Pufferraum (7) anschliesst, der einen Sensor (9) enthält, welcher nach dem Diffusions- und Chemosorptionsprinzip funktioniert und auf Kohlenwasserstoffe und flüchtige organische Derivate anspricht, und der mit einem Steuer- und Regelkreis (10) verbunden ist, welcher Ventilatorventile (8) vor dem Ventilator (3), sowie wechselseitig ein Ventil (12) in einem seitlich vom Pufferraum (7) abzweigenden Umleitungsschlot (11) steuert, mittels eines elektronischen Relais an einem Servomotor, in welchem Umleitungsschlot (11) sich ein elektrisch beheiztes flammlos wirkendes oxydierendes Element (13) befindet.

3. Verfahren gemass Anspruch 1, **dadurch gekennzeichnet**, dass der Sensor (9) zur elektronischen Regelung des Ventilstandes ein Signal bei Aenderung des Diffusionspotentials durch einen Unterschied in der Impedanz produziert, welcher in einem integrierten elektronischen Steuer- und Regelkreis (10) als kompatibeles Ausgangssignal wirkt und in einer damit verbundenen Servoschaltung einen Servomotor für das Oeffnen und Schliessen der Ventile (8) und (12) so steuert, dass beim Schliessen der Ventilatorventile (8) das Ansaugventil (12) im Umleitungsschlot (11) geöffnet bleibt, und beim Schliessen des Ansaugventils (12) die Ventilatorventile (8) geöffnet bleiben.

4. Verfahren gemäss Anspruch 1, **dadurch gekennzeinet**, dass der Aktivkohlenstoff in der Adsorptionskammer (6) nach vollständiger Adsorption reaktiviert wird durch Ansaugen von reiner Luft und Ableitung der verunreinigten Gase aus dem Aktivkohlenstoff durch das flammlos oxydierende Element (13) im Umleitungsschlot (11).

5. Verfahren gemäss Anspruch 1, **dadurch gekennzeinet**, dass es angewendet wird zur Entfernung von schädlichen Gasen, Dämpfen, Nebeln von Flüssigkeiten und von mitgeführten Teilchen fester Stäube aus Fabrikshallen.

## Claims

1. A process for the removal and elimination of solvent vapours and of gases from spraying, drying and curing booths and tunnels for the industrial lacquering technics, wherein the vapours and gases-containing atmosphere is conducted though filter casings (4) and then through an adsorption casing (6) with active carbon, after which it is sucked by a ventilator (3) into a main chimney (1), **characterized in that** said vapours and gases containing atmosphere from the adsorption casing (6) is conducted into a buffer space (7), wherein a sensor (9) is positioned,which reacts to hydrocarbons and to volatile organic derivatives and which upon appearance of said compounds in said buffer space (7) activates an electrical control circuit (10), which closes the valves (8) in front of the ventilator (3) and which opens a valve (12) in a bypass pipe (11), such that the air which contains the vapours and gases is flown through an electrically heated flameless operating oxidizing pile (13), so that said organic compounds are being annihilated.

2. A device for the removal and elimination of solvent vapours and of gases from spraying, drying and curing booths and tunnels for the industrial lacquering technics, wherein the vapours-containing atmosphere is cleaned by means of filter casings (4) and of a joint adsorption casing (6), containing active carbon, with a ventilator (3) and a main chimney (1), **characterized in that** at said adsorption casing (6) a buffer space (7) is connected, which comprises a sensor (9), operating according to the principle of diffusion and chemosorption, and which responds to hydrocarbons and to volatile organic derivatives, and which is connected with a control and adjusting circuit (10), which controls ventilator valves (8) before the ventilator (3) and alternately a valve (12) in a bypass pipe (11) which is branched aside of the buffer space (7), by means of an electronic relay joint to a servo-drive, said bypass pipe (11) comprising an electrically heated flameless operating oxidizing pile (13).

3. A process according to claim 1, **characterized in that** the sensor (9) for the electronic control of the position of the valve produces a signal at an alteration of the diffusion potential by a difference in the impedance, which operates in an integrated electronic control and adjusting circuit (10) as a compatible output signal and which in a joint switch gear controls a servo drive for opening and closing of the valves (8) and (12) in such a way that during closure of the ventilator valves (8) the valve for sucking (12) in the bypass pipe (11) will remain open and during closure of the sucking valve (12) the ventilator valves (8) will remain open.

4. A process according to claim 1, **characterized in that** the active carbon in the adsorption casing (6) after complete adsorption is reactivated by sucking of feed-through passage of clean air and discharge of the contaminated gases from the active carbon through the flameless oxidizing pile (13) in the bypass pipe (11).

5. A process according to claim 1, **characterized in that** it is used for the elimination of harmful gases, vapours, fogs of liquids and of entrained particles of dusts of solids from premises of factories.

## Revendications

1. Un procédé d'enlèvement et d'élimination de vapeurs des solvants et des gaz emanées dans les cabines et les tunnels d'arrosage, des séchoirs et de trempe dans des installations industrielles de vernissage à la laque, dans lequel le courant atmosphérique contenant des vapeurs et des gaz est conduit au travers de compartiments de filtre (4) et puis au travers d'un compartiment de carbone adsorbant actif (6) après quoi c'est aspiré par un ventilateur (3) vers un conduit de cheminée (1) principal, **caractérisé en ce que** l'air contenant les vapeurs et les gaz après le compartiment d'adsorption (6) est dirigé dans un réservoir amortisseur (7), dans lequel se trouve un détecteur (9), qui réagit aux hydrocarbures et aux dérivés organiques volatils, et qui incite un circuit de commande (10), dès que lesdits composés paraîssent dans ce réservoir amortisseur (7), à fermer les clapets de valves (8) devant le ventilateur et ouvrir un clapet de valve (12) dans un tuyau de détournement (11), ainsi que l'air contenant les vapeurs et les gaz circulera vers une pile (13) chauffée par électricité et opérant d'une manière oxydante sans flamme, tellement que les composés organiques soient éliminés.

2. Un dispositif pour l'enlèvement et l'élimination de vapeurs de solvants et de gaz emanées des cabines et des tunnels d'arrosage, de séchage et de trempe dans les installations industrielles de vernissage à la laque, dans lequel le courant de l'air contenant des vapeurs est purifié par des compartiments de filtre (4) et puis par un compartiment d'adsorption contenant du carbone actif (6), avec un ventilateur (3) et un conduit de cheminée (1) principal, **caractérisé en ce que** ledit compartiment d'adsorption (6) est suivi d'un réservoir amortisseur (7), comportant un détecteur (9), qui fonctionne selon le principe de diffusion et de sorption chimique, qui réagit aux hydrocarbures et aux dérivés organiques volatils, et qui est raccordé à un circuit de commande et de réglage (10), qui commande des clapets de valves (8) au ventilateur (3) et aussi un clapet de valve (12) d'interaction dans un tuyau de détournement (11) branchant à coté du réservoir amortisseur (7), la commande effectuée par un relais electronique relié à un moteur servo, et que dans ledit tuyau de détournement se trouve une pile (13) chauffée par électricité et opérant d'une manière oxydante sans flamme.

3. Un procédé selon la revendication 1, **caractérisé en ce que** le détecteur (9) pour la commande électronique de la position des clapets des valves produit un signal à la modification du potentiel de diffusion par une différance de l'impédance, qui fonctionne dans un circuit électronique intégré de commande et de réglage (10) comme un signal de sortie compatible et qui commande un moteur servo dans un équippement à contacteurs y reliés s'ouvrant et obturant des clapets (8) et (12) tellement que pendant l'obturation des clapets du ventilateur (8) le clapet de l'aspiration (12) dans le tuyau de détournement (11) restera ouvert et pendant l'obturation du clapet de l'aspiration (12) les clapets du ventilateur resteront ouverts.

4. Un procédé selon la revendication 1, **caractérise en ce que** le carbone actif dans le compartiment d' adsorption (6) après l'adsorption complète est récuperé par l'aspiration d'un courant d'air pur et le décharge des gaz contaminés du carbone actif vers la pile oxydante sans flamme (13) dans le tuyau de détournement (11).

5. Un procédé selon la revendication 1, **caractérisé en ce qu'il** est utilisé pour l'élimination des gaz dangereux, vapeurs, brumes de liquides et des particules entrainés des poussières de matières solides des bâtiments d'usine.
